# FASCICULE DE BREVET EUROPEEN

(11) **EP 1 636 006 B1**
(45) Date de publication et mention de la délivrance du brevet: **17.01.2007**
(21) Numéro de dépôt: 04767339.7
(22) Date de dépôt: 11.06.2004
(51) Int. Cl.: B29C 33/26

(54) **DISPOSITIF DE MOULAGE POUR LA FABRICATION DE RECIPIENTS EN MATERIAU THERMOPLASTIQUE**
FORMVORRICHTUNG ZUR HERSTELLUNG VON BEHÄLTERN AUS THERMOPLASTISCHEM MATERIAL
MOULDING DEVICE FOR THE PRODUCTION OF CONTAINERS MADE OF THERMOPLASTIC MATERIAL

(30) Priorité: 19.06.2003 FR 0307391
(43) Date de publication de la demande: 22.03.2006
(73) Titulaire: SIDEL PARTICIPATIONS, 76930 Octeville-sur-Mer (FR)
(72) Inventeur: LEMAISTRE, Eric, F-76930 Octeville-Sur-Mer (FR); LEBLOND, Régis, F-76930 Octeville-Sur-Mer (FR)
(74) Mandataire: Gorrée, Jean-Michel
(86) Numéro de dépôt international: PCT/FR2004/001476
(87) Numéro de publication internationale: WO 2005/002821

(56) Documents cités:
- FR-A- 2 646 802
- US-A- 3 825 396
- PATENT ABSTRACTS OF JAPAN vol. 0186, no. 66 (M-1724), 15 décembre 1994 (1994-12-15) & JP 6 262671 A (NISSEI ASB MACH CO LTD), 20 septembre 1994 (1994-09-20)

## Description

La présente invention concerne d'une façon générale le domaine des dispositifs de moulage pour la fabrication par soufflage ou étirage-soufflage de récipients à partir de préformes en matériau thermoplastique chauffé.

Plus particulièrement, l'invention concerne des perfectionnements apportés à ceux de ces dispositifs comportant au moins un moule comprenant au moins deux demi-moules déplaçables mutuellement entre une position d'ouverture dans laquelle ils sont écartés l'un de l'autre et une position de fermeture dans laquelle ils sont étroitement accolés l'un contre l'autre par des faces d'appui respectives coopérantes définissant un plan de joint, des moyens de verrouillage étant prévus pour verrouiller les deux demi-moules en position de fermeture, lesquels moyens de verrouillage comprenant, sur au moins un côté du moule, un premier élément de verrou en forme de crochet solidaire de façon fixe du premier demi-moule le long du bord de la face d'appui de celui-ci, un second élément de verrou en forme de crochet inversé par rapport au précédent et monté de façon pivotante, sur une surface de rotation, sur le second demi-moule, et des moyens d'actionnement fonctionnellement associés audit second élément de verrou de manière à déplacer celui-ci transversalement entre une position de verrouillage dans laquelle il est engagé avec le premier élément de verrou pour verrouiller les deux demi-moules en position de fermeture et une position de déverrouillage dans laquelle il est dégagé du premier élément de verrou pour libérer les deux demi-moules qui peuvent alors être écartés l'un de l'autre.

D'après le document FR-A-2 646 802, on connaît des moyens de verrouillage de deux demi-moules en position de fermeture qui comprennent une pluralité de doigts d'accouplement supportés les uns au-dessus des autres, de façon coaxiale, par un premier demi-moule et propres à être déplacés parallèlement à l'axe du moule pour s'engager dans une pluralité de lumières de réception respectives supportées par le second demi-moule.

De tels moyens de verrouillage donnent satisfaction et sont aujourd'hui d'un emploi courant dans les dispositifs de moulage à moules dits "portefeuilles".

Toutefois, ces moyens de verrouillage présentent plusieurs inconvénients importants.

Un inconvénient réside dans le fait que les doigts et lumières de réception sont supportés en porte-à-faux par les premier et second demi-moules, respectivement. Lors de l'application de la pression de soufflage (par exemple typiquement de l'ordre de 40 x 10⁵ Pa), les supports de ces doigts et lumières de réception, en saillie radiale, sont soumis à un effort sensiblement tangentiel à la périphérie du moule. Pour éviter leur déformation ou arrachement, il est nécessaire de constituer ces supports sous forme massive, ce qui accroît le poids des demi-moules et aussi leur coût.

Un autre inconvénient réside dans la structure en porte-à-faux de chaque doigt, dont la base est encastrée dans un support en saillie radiale solidaire d'un demi-moule tandis que, en position de verrouillage, l'extrémité libre du doigt est retenue dans une lumière de réception correspondante d'un support en saillie radiale solidaire de l'autre demi-moule. Sous l'effort de soufflage, chaque doigt est soumis à une contrainte de flexion/cisaillement qui, là encore, nécessite que chaque doigt soit constitué sous forme massive, et donc lourde et coûteuse.

Toutes ces exigences conduisent à des moyens de verrouillage en saillie sensible sur la périphérie du moule, alors que, dans les installations comportant un grand nombre de moules et fonctionnant à grande vitesse (dispositifs de moulage rotatifs du type carrousel), la place disponible est très comptée. En outre, ces moyens de verrouillage sont pesants et accroissent l'inertie des demi-moules, ce qui est préjudiciable dans les installations fonctionnant à cadence élevée.

Enfin, on soulignera que le mode de verrouillage/déverrouillage par déplacement axial d'une pluralité de doigts superposés ("en ligne") implique des courses relativement longues pour que la portion de chaque doigt engagée dans sa lumière correspondante soit suffisamment longue et procure une résistance mécanique appropriée : il n'est donc possible de prévoir qu'un nombre restreint de doigts et lumières, espacés axialement les uns des autres de façon notable. Il en résulte finalement une répartition non uniforme des efforts sur la hauteur du moule.

Il existe donc une demande constante pour des moules à structure simplifiée, moins encombrante, moins lourde, plus simple, moins coûteuse, cette demande étant rendue plus sensible par la recherche de cadences de production plus élevées qui nécessitent des mécanismes à fonctionnement plus rapide avec des inerties moindres.

A ces fins, l'invention propose un dispositif de moulage tel que mentionné au préambule qui, étant agencé conformément à l'invention, se caractérise par la combinaison des dispositions qui suivent :
- les premier et second éléments de verrou en forme de crochets s'étendent respectivement sur toute la hauteur des premier et second demi-moules,
- le second demi-moule présente, le long du bord de sa face d'appui et sur au moins la majeure partie de sa hauteur, une aile en saillie radiale conformée, sur sa face tournée à l'opposé de la face d'appui, en arc de cercle et propre à constituer une surface convexe de rotation, et
- ledit second élément de verrou appartient à une extrémité d'une pièce mobile pourvue d'une aile saillante transversale définissant une portée d'appui en arc de cercle qui est tournée en direction du second élément de verrou en forme de crochet et qui est propre à être en appui de façon continue sur toute la hauteur de la susdite surface de rotation du second élément de verrou.

Certes, on connaît déjà des moyens de verrouillage pour des dispositifs de moulage qui mettent en oeuvre des organes de verrou en forme de crochets, comme notamment dans le document US-A-3 825 396. Toutefois, dans cet agencement connu, les organes de verrou en forme de crochets ne sont pas répartis sur toute la hauteur du moule de sorte que les parties haute et basse du moule ne sont pas suffisamment bien maintenues. Au surplus, l'organe de verrou en forme de crochet qui est articulé en rotation sur l'un des deux demi-moules est supporté par un axe traversant, conventionnellement, des chapes appartenant à l'organe de verrou et au demi-moule. Cet axe est, lors du soufflage, soumis à des efforts de cisaillement et éventuellement de flexion très élevés, qui nécessitent qu'il soit dimensionné en conséquence et donc présente un diamètre important et une masse élevée.

Par contre, grâce à la structure proposée conformément à l'invention, lorsque le moule fermé et verrouillé est soumis à la pression de soufflage, l'effort s'exerçant sur le second demi-moule est repris, par la susdite pièce mobile, de façon sensiblement continue sur la majeure partie de sa hauteur. En outre, la course en rotation de la pièce mobile et du second élément de verrou est très courte, ce qui raccourcit les temps de verrouillage/déverrouillage et donc permet d'envisager une évolution de la cadence de fonctionnement. La pièce mobile avec le second élément de verrou possède des dimensions et une masse réduites, d'autant plus que, dans certains exemples de réalisation, elle peut être fabriquée au moins partiellement en métal léger (aluminium), de sorte que les inerties des organes en mouvement sont faibles. Enfin le nombre des pièces composantes est réduit et la structure de tels moyens de verrouillage est simple, de sorte que les coûts de fabrication peuvent être abaissés.

Les dispositions conformes à l'invention, bien que d'application potentielle générale, peuvent trouver une application tout particulièrement préférée dans le cas où le moule est du type portefeuille avec les deux demi-moules articulés mutuellement en rotation sur un arbre sensiblement parallèle à un côté du plan de joint, auquel cas les susdits moyens de verrouillage sont prévus du côté du moule opposé audit arbre des deux demi-moules. En particulier, dans les dispositifs de moulage dans lesquels chaque demi-moule comprend un porte-coquille auquel est fixé intérieurement une coquille munie d'une demi-empreinte de moulage, le plan de joint étant défini par les deux coquilles accolées en position de fermeture du moule, on prévoit alors que les moyens de verrouillage soient supportés par les deux porte-coquilles.

Dans un mode de réalisation préféré qui simplifie la fabrication, ladite face de l'aile saillante du second demi-moule, qui est tournée à l'opposé du bord de la face d'appui, est évidée en arc de cercle et abrite un axe de rotation dont la surface libre constitue la susdite surface de rotation.

De façon préférée, l'axe de rotation de la pièce mobile supportant le second élément de verrou est supporté par un petit nombre de chapes évidées solidaires du second demi-moule ; de façon encore préférée, dans ce cas, les chapes sont au nombre de deux distantes l'une de l'autre, et notamment situées au voisinage des extrémités respectives de l'axe, et ne reprennent aucun effort de fermeture, elles ne sont là que pour supporter la pièce mobile sur le demi-moule correspondant.

Dans un autre exemple de réalisation préféré, l'axe de rotation de la pièce mobile supportant le second élément de verrou possède une hauteur sensiblement supérieure à celle du second élément de verrou et ses deux extrémités sont engagées dans deux cuvettes respectives, solidaires du second moule, ce grâce à quoi la pièce mobile supportant le second élément de verrou est en appui sur sensiblement la totalité de sa hauteur sur l'axe de rotation.

Les premier et second éléments de verrou en forme de crochet peuvent, selon les circonstances, donner lieu à diverses réalisations. On peut, notamment envisager que les premier et second éléments de verrou en forme de crochet s'étendent de façon continue sur toute leur hauteur, les deux éléments de verrou se présentant alors sous forme de pièces ou de parties de moule massives. Mais, par exemple dans un souci de recherche d'un allégement des pièces mobiles et d'une réduction des inerties, on peut envisager qu'au moins le second élément de verrou en forme de crochet s'étende de façon discontinue sur toute sa hauteur et comporte une multiplicité de crochets écartés les uns des autres répartis sur toute sa hauteur, le premier élément de verrou en forme de crochet pouvant éventuellement lui aussi être réalisé sous cette forme.

Par ailleurs, il est très avantageux que l'axe de rotation soit agencé sous forme d'un axe excentré et que des moyens de commande de pivotement lui soient associés, ce grâce à quoi l'axe est susceptible d'occuper deux positions angulaires par rapport à la pièce mobile, à savoir une première position pour laquelle la pièce mobile est en appui sur la partie de l'axe ayant un rayon minimum et peut être commandée pour être déplacée vers sa position de verrouillage ou vers sa position de déverrouillage et une seconde position pour laquelle la pièce mobile est en appui sur une partie de l'axe ayant un rayon supérieur au rayon minimum et est bloquée en position de verrouillage en étant mise en traction entre les premier et second éléments de verrou mutuellement engagés et l'axe de rotation.

Les dispositions conformes à l'invention semblent devoir trouver une application tout particulièrement intéressante, en raison des gains de place qu'elles procurent et des accroissements de vitesse de fonctionnement qu'elles autorisent, dans les dispositifs de moulage du type carrousel mobile en rotation, en particulier équipé d'une multiplicité de moules, auquel cas les moyens d'actionnement fonctionnellement associés au second élément de verrou comprennent au moins un galet suiveur fou supporté par une partie de la pièce mobile située au-delà de sa portée d'appui par rapport au second élément de verrou, ledit galet étant propre à coopérer avec une came fixe de guidage disposée latéralement au carrousel rotatif. Avantageusement alors, les moyens d'actionnement du second élément de verrou comprennent un ressort de rappel propre à rappeler la pièce mobile dans une position pour laquelle le second élément de verrou est en position d'accrochage.

Toujours dans le cas des dispositifs de moulage du type carrousel, il est intéressant, dans le cas de la mise en oeuvre précitée d'un axe de rotation excentré, que les moyens de commande de pivotement de l'axe excentré comprennent un galet suiveur fou supporté, par l'intermédiaire d'un mécanisme de renvoi, par une extrémité dudit arbre, ledit galet étant propre à coopérer avec une came fixe de guidage disposée latéralement au carrousel rotatif. Avantageusement alors, les moyens de commande de pivotement de l'axe excentré comprennent un ressort de rappel propre à rappeler ledit axe dans sa susdite première position.

Les dispositions qui viennent d'être exposées peuvent donner lieu à de nombreuses variantes de réalisation.

Notamment, il est envisageable que le premier élément de verrou en forme de crochet soit rapporté et fixé sur le premier demi-moule, ou bien en variante qu'il soit constitué de façon intégrale avec le premier demi-moule.

De même, il est envisageable que le second élément de verrou en forme de crochet soit rapporté et fixé sur la susdite pièce mobile, ou bien en variante qu'il soit constitué de façon intégrale avec la susdite pièce mobile.

On peut également prévoir que les chapes de support de l'axe de rotation soient intégrales avec le second demi-moule, ou bien en variante que la susdite surface de pivotement en arc de cercle pour la pièce mobile soit supportée par une platine rapportée et fixée sur le second demi-moule.

Comme cela a été indiqué plus haut, la reprise des efforts, lors de l'opération de soufflage, est répartie de façon régulière sur toute la hauteur des demi-moules. De plus, la reprise directe des efforts dirigés tangentiellement au moule et la restriction à un nombre minimum de chapes de support de l'axe de rotation conduit à un allègement possible des structures de chaque demi-moule, cette option paraissant alors particulièrement favorable dans le cas des moules à structure porte-coquille/coquille.

L'invention sera mieux comprise à la lecture de la description détaillée qui suit de certains modes de réalisation préférés donnés à titre purement illustratif. Dans cette description, on se réfère aux dessins annexés sur lesquels :
- les figures 1A et 1B sont des vues schématiques de dessus, en coupe, d'une partie de moule du type portefeuille équipé de moyens de verrouillage conformes à l'invention, montrés respectivement en position de verrouillage et en position de déverrouillage ;
- la figure 2 est une vue schématique de dessus, en coupe, d'une partie de moule du type portefeuille montrant une variante pratique de réalisation des moyens de verrouillage de la figure 1A ;
- la figure 3 est une vue de dessus de l'ensemble d'un moule portefeuille équipé de moyens de verrouillage selon la variante de réalisation de la figure 2 ;
- la figure 4 est une vue partielle, en coupe et en perspective, d'une autre variante de réalisation des moyens de verrouillage de la figure 2 ;
- la figure 5 est une vue partielle en coupe d'une variante de réalisation d'une partie de l'agencement illustré à la figure 4 ;
- les figures 6A, 6B et 6C sont des vues schématiques de dessus, en coupe, d'une partie de moule portefeuille montrant encore une autre variante de réalisation des moyens de verrouillage respectivement dans trois positions fonctionnelles ;
- la figure 7 est une vue schématique en perspective de l'ensemble d'un moule agencé selon l'invention ; et
- la figure 8 est une vue schématique en perspective d'une variante de réalisation du moule illustré à la figure 7.

Les dispositions conformes à l'invention sont des perfectionnements apportés aux dispositifs de moulage pour la fabrication par soufflage ou étirage-soufflage de récipients, tels que des bouteilles, à partir de préformes en matériau thermoplastique (par exemple en PET) chauffé. Un tel dispositif de moulage comporte au moins un moule comprenant au moins deux demi-moules (éventuellement une troisième partie forme un fond de moule déplaçable axialement) qui sont déplaçables mutuellement entre une position d'ouverture dans laquelle ils sont écartés l'un de l'autre et une position de fermeture dans laquelle ils sont étroitement accolés l'un contre l'autre par des faces respectives coopérantes définissant un plan de joint, des moyens de verrouillage étant prévus pour verrouiller les deux demi-moules en position de fermeture et empêcher leur écartement ou entrebâillement lors de l'introduction du fluide de soufflage sous pression très élevée (par exemple typiquement de l'ordre de 40 x 10⁵ Pa).

De façon courante, de tels dispositifs de moulage peuvent comporter une multiplicité de moules et peuvent alors être agencés sous forme d'un dispositif rotatif ou carrousel avec les moules répartis périphériquement, les diverses fonctions d'ouverture/fermeture, verrouillage/déverrouillage, ... des moules pouvant être commandées séquentiellement au cours de la rotation par des galets suiveurs portés par les moules et coopérant avec des cames de guidage montées fixes à l'extérieur de la partie tournante.

Bien que les dispositions conformes à l'invention puissent trouver application dans tout type de moule, elles trouvent application tout particulièrement dans les moules équipés de deux demi-moules rotatifs l'un par rapport à l'autre ou moule portefeuille, qui sont actuellement très largement répandus, et c'est donc dans le cadre d'un moule portefeuille que les dispositions de l'invention vont être exposées en détail, sans pour autant que la protection soit limitée à ce seul type de moule.

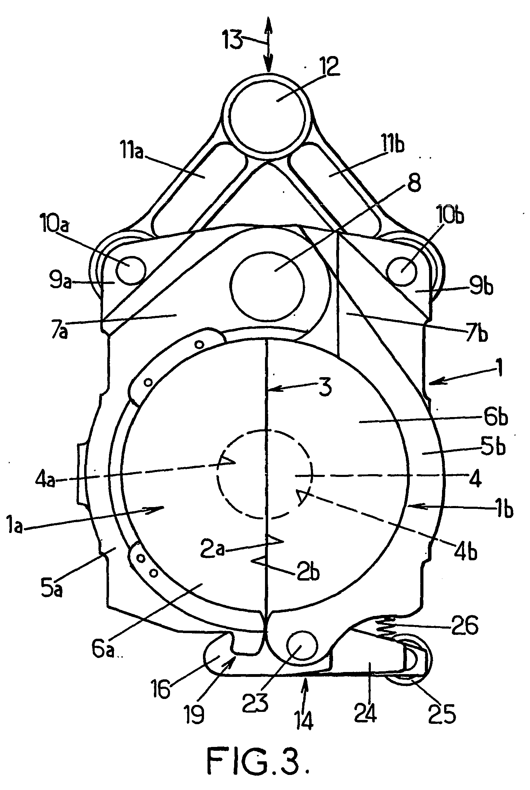

A la figure 3 est illustré de façon simplifiée, en vue de dessus, l'agencement général d'un moule portefeuille, désigné dans son ensemble par la référence 1, comprenant deux demi-moules 1a et 1b (un fond mobile axialement - non visible - pouvant également être prévu à la base du moule). Les deux demi-moules possèdent respectivement deux faces coopérantes ou faces d'appui 2a, 2b qui, en position de fermeture, définissent un plan de joint 3. Les faces coopérantes sont évidées avec respectivement deux demi-empreintes 4a, 4b qui, réunies, définissent le volume de moulage 4 ayant la forme extérieure du récipient à obtenir.

Dans l'exemple plus particulièrement illustré à la figure 3, chaque demi-moule 1a, 1b a une structure composite et comprend une armature extérieure ou porte-coquille 5a, 5b et une pièce de moulage intérieure ou coquille 6a, 6b, qui est fixée de manière démontable dans le porte-coquille respectif et qui comporte la demi-empreinte respective 4a, 4b précitée.

Les demi-moules 1a, 1b (ici, les porte-coquilles 5a, 5b) comportent, d'un côté, des joues saillantes 7a, 7b respectivement qui s'intercalent les unes entre les autres de façon superposée et qui sont traversées par un arbre 8 disposé dans le prolongement du plan de joint.

En outre deux oreilles saillantes respectivement 9a, 9b supportent à rotation, par des axes 10a, 10b écartés de part et d'autre de l'arbre 8, les extrémités de deux biellettes d'actionnement 11a, 11b dont les deux autres extrémités respectives sont réunies à libre rotation sur un axe 12 qui peut être déplacé linéairement (flèche 13), vers l'axe 8 ou en sens inverse, par des moyens d'entraînement non montrés.

De l'autre côté du plan de joint 3 et à l'opposé de l'arbre 8 sont prévus des moyens de verrouillage 14 destinés à maintenir les deux demi-moules 1a, 1b en position de fermeture lors de l'application de la pression de soufflage.

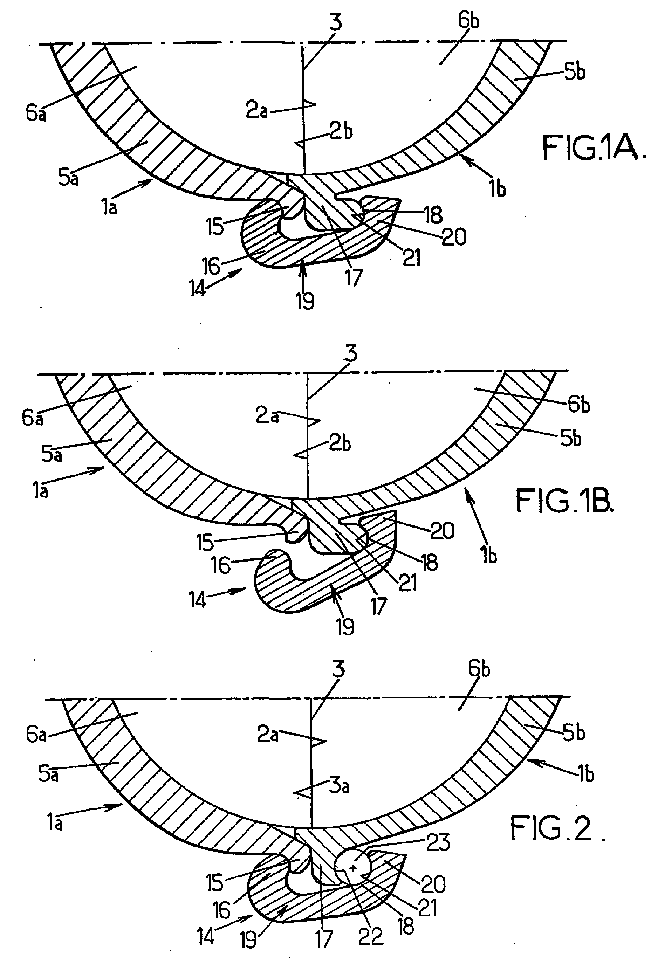

En se reportant maintenant à la figure 1A, les moyens de verrouillage 14 comprennent :
- un premier élément de verrou 15 en forme de crochet qui est solidaire de façon fixe du premier demi-moule 1a (celui de gauche sur la figure 1A) qui s'étend sensiblement le long du bord de la face d'appui 2a de celui-ci,
- un second élément de verrou 16 en forme de crochet inversé par rapport au précédent et monté de façon pivotante, sur une surface de rotation, sur le second demi-moule 1b (à droite sur la figure 1B), et
- des moyens d'actionnement fonctionnellement associés au second élément de verrou 16 de manière à déplacer celui-ci transversalement au moule entre une position d'engagement avec le premier élément de verrou 15 (verrouillage du moule 1 en position de fermeture, illustrée à la figure 1A) et une position de dégagement hors du premier élément de verrou 15 (déverrouillage du moule 1, illustrée à la figure 1B).

Le premier élément de verrou 15 s'étend sur toute la hauteur du premier demi-moule 1a et le second élément de verrou 16 s'étend sur toute la hauteur du second demi-moule 1b.

Le second demi-moule 1b comporte, le long du bord de sa face d'appui 2b et sur au moins la majeure partie de sa hauteur, une aile 17 en saillie radiale conformée, sur sa face tournée à l'opposé de la face d'appui 2b, en arc de cercle et propre à constituer la susdite surface de rotation 18 (qui est convexe sur les figures 1A et 1B) pour le second élément de verrou 16.

Dans ces conditions, le second élément de verrou 16 appartient à une pièce mobile 19 qui s'étend sur toute la hauteur du second demi-moule 1b. Un des bords de cette pièce mobile 19 forme le second élément de verrou 16 en forme de crochet, tandis que son bord opposé est pourvu d'une aile 20 saillante transversale définissant une portée d'appui en arc de cercle 21 (concave sur les figures 1A et 1B) qui est tournée en direction du second élément de verrou 16 et qui est propre à être en appui sur toute la hauteur de la susdite surface de rotation 18.

Grâce à cet agencement, les deux demi-moules 1a, 1b sont maintenus en position de fermeture par la pièce mobile 19 dont les deux bords opposés (second élément de verrou 16 et aile 20) sont engagés contre des parties complémentaires du premier demi-moule 1a (premier élément de verrou 15) et du second demi-moule 1b (aile saillante 17). En outre, le maintien des deux demi-moules 1a, 1b en position de fermeture est assuré sur toute la hauteur du moule de façon sensiblement continue, et non plus de façon discontinue comme c'était le cas avec les moyens de verrouillage à doigts mobiles utilisés jusqu'à présent.

La réalisation de la surface d'appui en arc de cercle 18 peut s'avérer difficile et onéreuse à réaliser, et un exemple concret de réalisation, plus simple et plus économique à fabriquer, est illustré à la figure 2. Ici, l'aile saillante 17 a sa face tournée à l'opposé de la face d'appui 2b qui est creusée d'une gorge 22 en arc de cercle s'étendant sur toute sa hauteur et un axe 23 est engagé dans ladite gorge. La susdite surface de rotation 18 est ici une surface convexe constituée par la surface de l'axe 23. Dans ces conditions, dans la position de verrouillage illustrée à la figure 2, les efforts tendant à écarter l'un de l'autre les deux demi-moules 1a, 1b lors du soufflage sont repris par la pièce mobile 19 par l'intermédiaire, du côté du second demi-moule 1b, de l'axe de rotation 23. En donnant aux gorges 21 de la pièce mobile 19 et 22 de l'aile 17 du second demi-moule 1b des formes parfaitement ajustées complémentairement à la surface externe de l'axe 23, on est assuré d'une reprise parfaite des efforts sur toute la hauteur du moule, avec des pressions moindres sur les surfaces en contact. Il est alors possible de réaliser des pièces moins massives, et donc moins lourdes, qui présentent ainsi des inerties moindres ; de plus le débattement angulaire de la pièce mobile 19 entre les positions de verrouillage et de déverrouillage est faible, et la moindre course de cette pièce, qui se traduit par une durée de déplacement plus courte, contribue à autoriser une augmentation des cadences de fonctionnement.

Pour commander le déplacement de la pièce mobile 19, on peut, comme illustré à la figure 3, prévoir à la base de la pièce mobile une extension 24 de celle-ci dont l'extrémité supporte un galet suiveur 25 monté fou en rotation. Le moule 1 appartenant à un dispositif de moulage du type carrousel, le galet 25, lors de la rotation du dispositif, peut entrer en contact avec une came de guidage (non montrée) montée fixe latéralement à la partie tournante. On peut ainsi commander sélectivement le déplacement de la pièce mobile 19. Pour simplifier l'agencement de ces moyens de commande, on peut prévoir qu'ils comprennent un ressort 26 associé à l'extension 24 de la pièce mobile 19 et propre à rappeler celle-ci en position rabattue en direction du moule : ainsi la pièce mobile 19 est maintenue dans une position telle que, lors du rapprochement des deux demi-moules, l'enclenchement de la pièce mobile 19 sur le premier élément de verrou 15 s'effectue automatiquement : le verrouillage est donc obtenu de façon automatique et assurée. L'interaction du galet 25 avec la came de guidage n'intervient alors que pour commander le dégagement de la pièce mobile 19 hors du premier élément de verrou 15 en vue de l'ouverture du moule.

Dans les exemples illustrés schématiquement aux figures 1A, 1B, 2 et 3, le premier élément de verrou 15 est montré comme faisant partie intégrante du premier demi-moule 1a, notamment comme partie intégrante du premier porte-coquille 5a.

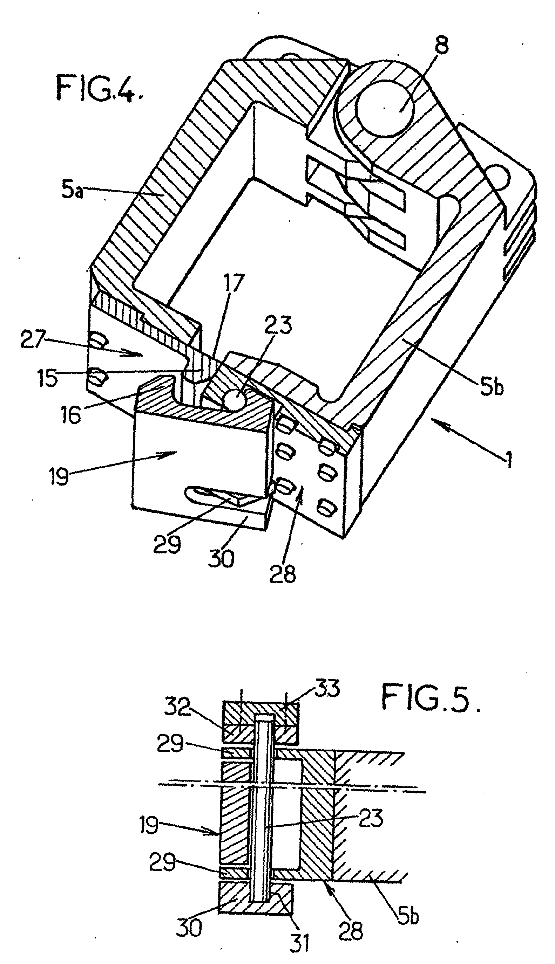

Il est bien entendu possible de prévoir, en variante, que le premier élément de verrou 15 appartient à la pièce rapportée sur le premier demi-moule, par exemple sous forme d'une plaque 27 boulonnée sur le premier demi-moule 1a, notamment le premier porte-coquille 5a, comme illustré à la figure 4 (laquelle figure 4 illustre en coupe une autre configuration de moule portefeuille avec des porte-coquilles 5a, 5b semi-rectangulaires - les coquilles n'étant pas montrées pour faciliter la lecture du dessin -) .

De la même manière l'aile 17 transversale, elle aussi, peut appartenir à une pièce rapportée sur le second demi-moule 1b, respectivement le second porte-coquille 5b, par exemple sous forme d'une plaque 28 boulonnée sur le second demi-moule 1b, respectivement le second porte-coquille 5b, comme illustré à la figure 4.

Les agencements proposés en regard de la figure 4 permettent de simplifier la structure, et donc la fabrication du premier et/ou du second demi-moule, respectivement du premier et/ou du second porte-coquille. En outre, il est possible de constituer l'un et/ou l'autre des éléments de verrou 15, 16 en des métaux différents de celui du demi-moule, respectivement du porte-coquille correspondant, en particulier lorsque ceux-ci sont en fonte d'aluminium (les éléments de verrou pouvant alors être constitués en acier).

Pour retenir l'axe 23, on peut prévoir que le second demi-moule 1b, ou respectivement le second porte-coquille 5b, ou respectivement encore la plaque 28 précitée comporte un petit nombre de chapes 29 saillantes, évidées, et traversées par l'axe 23. Avantageusement, on peut prévoir deux chapes 29 seulement situées au voisinage des extrémités respectives de l'axe 23 (la chape 29 inférieure est visible à la figure 4). De même les parties inférieure et supérieure de la pièce mobile 19 sont agencées en forme de chape 30 recevant les extrémités de l'axe 23. Du fait que les efforts sont repris transversalement par les pièces en appui de part et d'autre de l'axe 23, les chapes 29, 30 n'ont à transmettre aucun effort et n'ont pour fonction que de retenir l'axe en dehors des périodes de soufflage : le montage de l'axe n'a donc pas à être effectué avec des tolérances trop serrées et les chapes peuvent être dimensionnées au minimum de manière à laisser l'axe dégagé sur une hauteur maximale afin d'accroître la longueur des appuis.

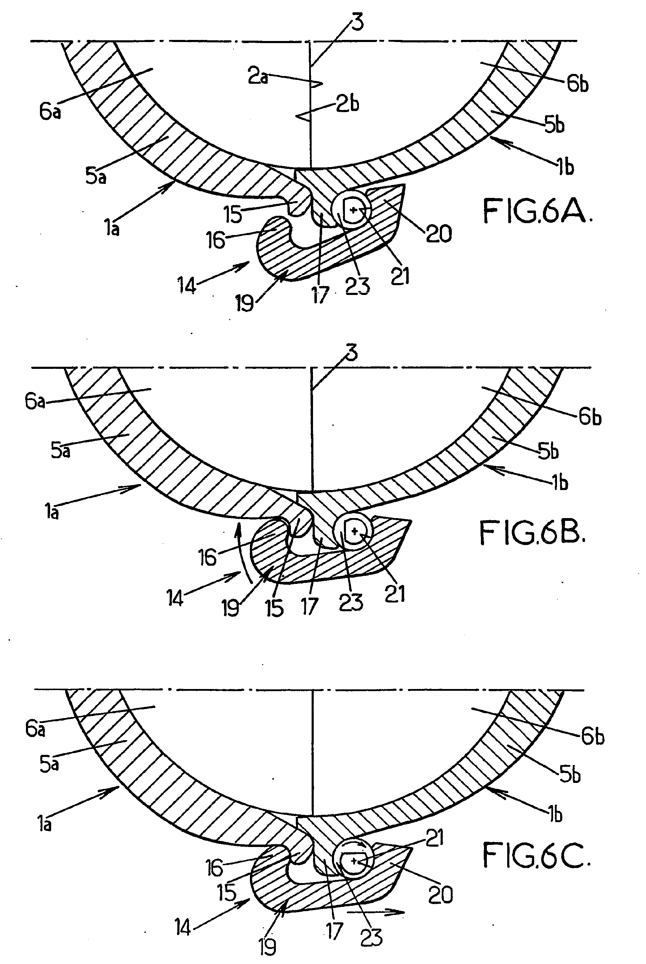

On peut encore accroître cette longueur d'appui en agençant les extrémités supérieure et inférieure de l'axe 23 dans des cuvettes prévues sur la pièce mobile 19. Par exemple, comme illustré à la figure 5, la partie inférieure 30 de la pièce mobile 19 peut être disposée en dessous de la face inférieure de la plaque 28, de sorte que la chape 29 affleure cette face inférieure. Cette partie inférieure 30 est évidée pour constituer une cuvette 31 recevant l'extrémité inférieure de l'axe 23. La partie supérieure 32 de la pièce mobile est alésée et traversée par l'extrémité supérieure de l'axe 23. Eventuellement, elle peut être coiffée par un couvercle 33 protégeant l'extrémité de l'axe.

Aux figures 6A à 6C est illustrée une variante de réalisation très intéressante par le fait qu'elle permet d'assurer une confirmation du verrouillage. L'agencement est identique à celui illustré à la figure 2, à ceci près que l'axe 23 est un axe pivotant excentré.

Dans la position non verrouillée illustrée à la figure 6A, l'axe 23 est orienté angulairement avec sa portion de plus faible rayon au contact de la gorge 21 de la pièce mobile 19.

Puis, la pièce mobile 19 est pivotée autour de l'axe 23 pour venir s'engager dans l'élément de verrou 15 en forme de crochet, pour assurer le verrouillage des deux demi-moules 1a, 1b en position de fermeture (figure 6B).

Enfin, l'axe 23 est tourné sur lui-même de sorte que le rayon de la portion engagée dans la gorge 21 augmente, ce qui a pour effet de repousser la pièce mobile 19 vers la droite (sur la figure 6C) et donc de forcer le second élément de verrou 16 contre le premier élément de verrou 15 du premier demi-moule 1a. On obtient ainsi une confirmation simple du verrouillage.

Lors du déverrouillage, une rotation en sens inverse de l'axe 23 libère le second élément de verrou 16 vis-à-vis du premier élément de verrou 15 fixe et le pivotement de la pièce mobile 19 vers l'extérieur peut alors être effectué.

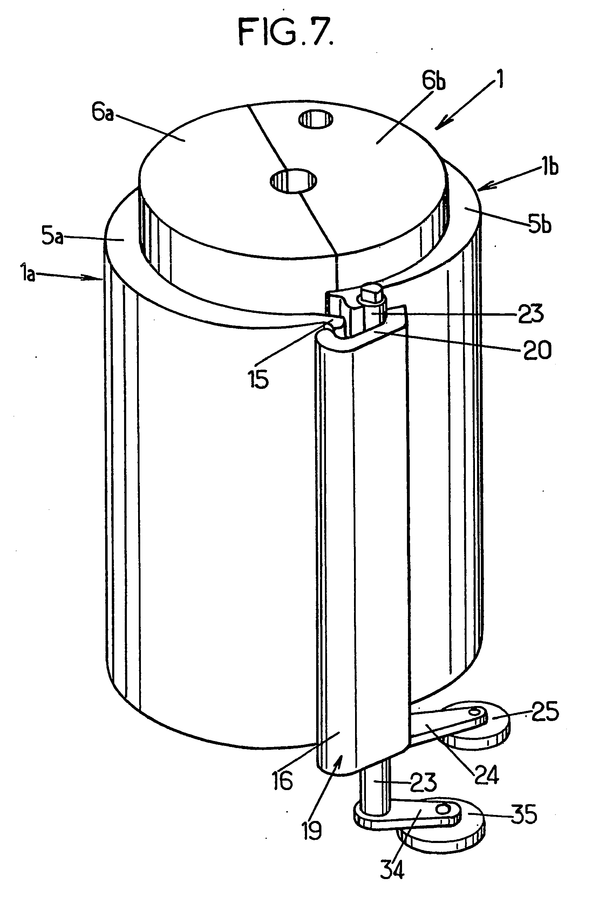

La rotation de l'axe 23 peut être obtenue par exemple (figure 7) en lui associant rigidement, à une de ses extrémités, un bras 34 supportant à son extrémité libre un galet suiveur 35 monté fou qui est propre à coopérer avec une came de guidage disposée, fixe, latéralement à la partie tournante d'un dispositif de moulage du type carrousel.

A la figure 7 sont illustrés schématiquement en perspective les éléments essentiels d'un moule 1 agencé selon l'invention comme illustré aux figures 6A à 6C, le moule 1 étant ici visible sur toute sa hauteur.

Grâce aux dispositions mises en oeuvre conformément à l'invention, les efforts auxquels sont soumis les porte-coquilles 5a, 5b sont moindres que dans les agencements antérieurs, en raison notamment d'une masse réduite et d'une inertie moindre. Dans ces conditions, on peut envisager, en conjonction avec un moindre débattement angulaire de la pièce mobile 19 des moyens de verrouillage, d'accroître la cadence de fonctionnement du moule.

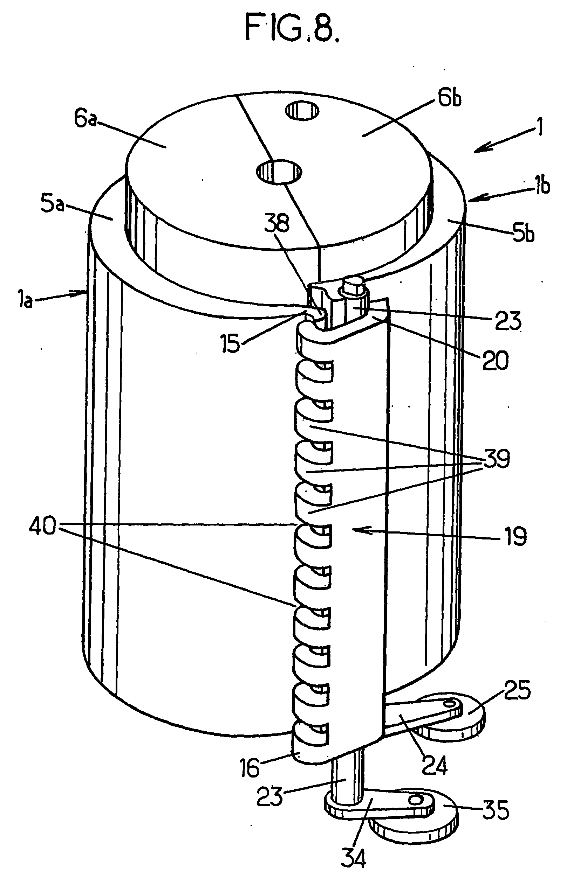

Toujours dans le souci d'allégement des pièces en mouvement et de réduction des inerties susceptible d'autoriser un relèvement des cadences de fonctionnement, on peut envisager également de constituer le premier élément de verrou 15 et/ou le second élément de verrou 16 sous forme de pièces s'étendant de façon discontinue sur toute la hauteur des demi-moules 1a, 1b, comme illustré à la figure 8. Dans l'exemple illustré à la figure 8, on a supposé que les deux éléments de verrou 15 et 16 étaient réalisés sous forme d'une multiplicité de crochets 38, 39 respectivement, discontinus, disposés en regard et susceptibles d'être en prise deux par deux. Si le nombre de ces paires de crochets 38, 39 est suffisamment élevé, autrement dit si les intervalles 40 entre les crochets ne sont pas trop étendus (par exemple on peut prévoir des intervalles 40 ayant approximativement la même hauteur que celle des crochets 38, 39), on obtient une reprise d'effort sensiblement régulière, analogue à celle procurée par des éléments de verrou à crochet continu comme illustré à la figure 7. Pour fixer les idées, le nombre de ces crochets 38, 39 peut être de l'ordre de la dizaine répartis sur une hauteur de l'ordre de 35 cm (moule de bouteille de 1,5 litres par exemple).

En variante, on peut envisager d'associer un élément de verrou à crochet continu (par exemple le premier élément de verrou 15 qui est fixe) et un élément de verrou à crochets multiples (notamment le second élément de verrou 16 qui est mobile).

## Revendications

1. Dispositif de moulage pour la fabrication par soufflage ou étirage-soufflage de récipients à partir de préformes en matériau thermoplastique chauffé, ledit dispositif comportant au moins un moule (1) comprenant au moins deux demi-moules (1a, 1b) déplaçables mutuellement entre une position d'ouverture dans laquelle ils sont écartés l'un de l'autre et une position de fermeture dans laquelle ils sont étroitement accolés l'un contre l'autre par des faces d'appui (2a, 2b) respectives coopérantes définissant un plan de joint (3), des moyens de verrouillage (14) étant prévus pour verrouiller les deux demi-moules (1a, 1b) en position de fermeture, lesquels moyens de verrouillage (14) comprenant, sur au moins un côté du moule, un premier élément de verrou (15) en forme de crochet solidaire de façon fixe du premier demi-moule (1a) le long du bord de la face d'appui (2a) de celui-ci, un second élément de verrou (16) en forme de crochet inversé par rapport au précédent et monté de façon pivotante, sur une surface de rotation, sur le second demi-moule (1b), et des moyens d'actionnement fonctionnellement associés audit second élément de verrou de manière à déplacer celui-ci transversalement entre une position de verrouillage dans laquelle il est engagé avec le premier élément de verrou pour verrouiller les deux demi-moules en position de fermeture et une position de déverrouillage dans laquelle il est dégagé du premier élément de verrou pour libérer les deux demi-moules qui peuvent alors être écartés l'un de l'autre,
**caractérisé en ce qu'**en outre :
- les premier et second éléments de verrou (15, 16) en forme de crochets s'étendent respectivement sur toute la hauteur des premier et second demi-moules (1a, 1b),
- le second demi-moule (1b) présente, le long du bord de sa face d'appui (2b) et sur au moins la majeure partie de sa hauteur, une aile (17) en saillie radiale conformée, sur sa face tournée à l'opposé de la face d'appui (2b), en arc de cercle et propre à constituer une surface de rotation (18), et
- ledit second élément de verrou (16) appartient à une extrémité d'une pièce mobile (19) pourvue d'une aile (20) saillante transversale définissant une portée d'appui (21) en arc de cercle qui est tournée en direction du second élément de verrou (16) en forme de crochet et qui est propre à être en appui de façon continue sur toute la hauteur de la susdite surface de rotation (18) du second élément de verrou (1b),
ce grâce à quoi, lorsque le moule est fermé et verrouillé et soumis à la pression de soufflage, l'effort auquel est soumis le second demi-moule est repris, par la susdite pièce mobile, de façon sensiblement continue sur la majeure partie de sa hauteur par l'intermédiaire de ladite surface de rotation.

2. Dispositif de moulage selon la revendication 1, dans lequel le moule (1) est du type portefeuille avec les deux demi-moules (1a, 1b) articulés mutuellement en rotation sur un arbre (8) sensiblement parallèle à un côté du plan de joint, (3), **caractérisé en ce que** les susdits moyens de verrouillage (14) sont prévus du côté du moule opposé audit arbre (8) des deux demi-moules.

3. Dispositif de moulage selon la revendication 1 ou 2, dans lequel chaque demi-moule (1a, 1b) comprend un porte-coquille (5a, 5b) auquel est fixé intérieurement une coquille (6a, 6b) munie d'une demi-empreinte (4a, 4b) de moulage, le plan de joint (6) étant défini par les deux coquilles (6a, 6b) accolées en position de fermeture du moule, **caractérisé en ce que** les moyens de verrouillage (14) sont supportés par les deux porte-coquilles (5a, 5b).

4. Dispositif de moulage selon l'une quelconque des revendications 1 à 3, **caractérisé en ce que** ladite face de l'aile saillante (17) du second demi-moule (1b), qui est tournée à l'opposé du bord de la face d'appui (2b), est évidée (22) en arc de cercle et abrite un axe de rotation (23) dont la surface libre constitue la susdite surface de rotation (18).

5. Dispositif de moulage selon la revendication 4, **caractérisé en ce que** l'axe de rotation (23) de la pièce mobile (19) supportant le second élément de verrou (16) est supporté par un petit nombre de chapes évidées solidaires du second demi-moule.

6. Dispositif de moulage selon la revendication 5, **caractérisé en ce que** les chapes sont au nombre de deux distantes l'une de l'autre, et notamment situées au voisinage des extrémités respectives de l'axe.

7. Dispositif de moulage selon la revendication 4, **caractérisé en ce que** l'axe de rotation de la pièce mobile supportant le second élément de verrou possède une hauteur sensiblement supérieure à celle du second élément de verrou et **en ce que** ses deux extrémités sont engagées dans deux cuvettes respectives, solidaires du second moule, ce grâce à quoi la pièce mobile supportant le second élément de verrou est en appui sur sensiblement la totalité de sa hauteur sur l'axe de rotation.

8. Dispositif de moulage selon l'une quelconque des revendications 1 à 7, **caractérisé en ce que** les premier et second éléments de verrou en forme de crochet (15, 16) s'étendent de façon continue sur toute leur hauteur.

9. Dispositif de moulage selon l'une quelconque des revendications 1 à 7, **caractérisé en ce qu'**au moins le second élément de verrou en forme de crochet (16) s'étend de façon discontinue sur toute sa hauteur et comporte une multiplicité de crochets (39) écartés les uns des autres (40) répartis sur toute sa hauteur.

10. Dispositif de moulage selon l'une quelconque des revendications 4 à 9, **caractérisé en ce que** l'axe de rotation est agencé sous forme d'un axe excentré et **en ce que** des moyens de commande de pivotement lui sont associés,
ce grâce à quoi l'axe est susceptible d'occuper deux positions angulaires par rapport à la pièce mobile, à savoir une position à rayon minimum pour laquelle la pièce mobile est en appui sur la partie de l'axe ayant un rayon minimum et pour laquelle la pièce mobile peut être commandée pour être déplacée vers sa position de verrouillage ou vers sa position de déverrouillage et une position à rayon accru pour laquelle la pièce mobile est en appui sur une partie de l'axe ayant un rayon supérieur au rayon minimum et pour laquelle la pièce mobile, en position de verrouillage, est bloquée dans cette position en étant mise en traction entre les premier et second éléments de verrou mutuellement engagés et l'axe de rotation.

11. Dispositif de moulage selon l'une quelconque des revendications 1 à 10, ce dispositif étant du type carrousel mobile en rotation, **caractérisé en ce que** les moyens d'actionnement fonctionnellement associés au second élément de verrou comprennent au moins un galet suiveur fou supporté par une partie de la pièce mobile située au-delà de sa portée d'appui par rapport au second élément de verrou, ledit galet étant propre à coopérer avec une came fixe de guidage disposée latéralement au carrousel rotatif.

12. Dispositif de moulage selon la revendication 11, **caractérisé en ce que** les moyens d'actionnement du second élément de verrou comprennent un ressort de rappel propre à rappeler la pièce mobile dans une position pour laquelle le second élément de verrou est en position d'accrochage.

13. Dispositif de moulage selon la revendication 10, ce dispositif étant du type carrousel mobile en rotation, **caractérisé en ce que** les moyens de commande de pivotement de l'axe excentré comprennent un galet suiveur fou supporté, par l'intermédiaire d'un mécanisme de renvoi, par une extrémité dudit arbre, ledit galet étant propre à coopérer avec une came fixe de guidage disposée latéralement au carrousel rotatif.

14. Dispositif de moulage selon la revendication 13, **caractérisé en ce que** les moyens de commande de pivotement de l'axe excentré comprennent un ressort de rappel propre à rappeler ledit axe dans sa position à rayon minimum.

15. Dispositif de moulage selon l'une quelconque des revendications 1 à 14, **caractérisé en ce que** le premier élément de verrou en forme de crochet est rapporté et fixé sur le premier demi-moule.

16. Dispositif de moulage selon l'une quelconque des revendications 1 à 14, **caractérisé en ce que** le premier élément de verrou en forme de crochet est constitué de façon intégrale avec le premier demi-moule.

17. Dispositif de moulage selon l'une quelconque des revendications 1 à 16, **caractérisé en ce que** le second élément de verrou en forme de crochet est rapporté et fixé sur la susdite pièce mobile.

18. Dispositif de moulage selon l'une quelconque des revendications 1 à 16, **caractérisé en ce que** le second élément de verrou en forme de crochet est constitué de façon intégrale avec la susdite pièce mobile.

19. Dispositif de moulage selon l'une quelconque des revendications 1 à 16, **caractérisé en ce que** la susdite surface de pivotement en arc de cercle pour la pièce mobile est supportée par une platine rapportée et fixée sur le second demi-moule.

## Claims

1. A molding device for blow-molding or stretch-blow-molding containers from heated thermoplastic preforms, said device comprising at least one mold (1) comprising at least two half-molds (1a, 1b) that can be moved with respect to each other between an open position in which they are parted from one another and a closed position in which they are closely pressed against one another via cooperating respective bearing faces (2a, 2b) defining a parting surface (3), locking means (14) being provided to lock the two half-molds (1a, 1b) in the closed position, which locking means (14) comprising, on at least one side of the mold, a first lock element (15) in the form of a hook secured fixedly to the first half-mold (1a) along the edge of the bearing face (2a) thereof, a second lock element (16) in the form of a hook inverted with respect to the previous one and pivotally mounted, on a rotation surface, on the second half-mold (1b), and actuating means operationally associated with said second lock element in such a way as to move the latter transversely between a locked position in which it is engaged with the first lock element to lock the two half-molds in the closed position and an unlocked position in which it is disengaged from the first lock element to release the two half-molds that can then be parted from one another,
**characterized in that**, in addition:
- the first and second hook-shaped lock elements (15, 16) extend respectively over the entire height of the first and second half-molds (1a, 1b),
- the second half-mold (1b) has, along the edge of its bearing face (2b) and over at least most of its height, a radially projecting flange (17) shaped, on its face facing away from the bearing face (2b), as an arc of a circle and able to constitute a rotation surface (18), and
- said second lock element (16) belongs to one end of a moving part (19) provided with a transverse projecting flange (20) defining a bearing surface (21) in the shape of an arc of a circle facing toward the second hook-shaped lock element (16) and able to bear continuously over the entire height of said rotation surface (18) of the second lock element (1b),
whereby, when the mold is closed and locked and subjected to the blowing pressure, the force to which the second half-mold is subjected is reacted, by said moving part, substantially continuously over most of its height via said rotation surface.

2. The molding device as claimed in claim 1, in which the mold (1) is of the hinged type with the two half-molds (1a, 1b) rotationally articulated to one another on a shaft (8) substantially parallel to one side of the parting surface (3), **characterized in that** said locking means (14) are provided on the side of the mold which is opposite said shaft (8) of the two half-molds.

3. The molding device as claimed in claim 1 or 2, in which each half-mold (1a, 1b) comprises a shell holder (5a, 5b) to which a shell (6a, 6b) provided with a molding half-cavity (4a, 4b) is internally fixed, the parting surface (6) being defined by the two shells (6a, 6b) pressed together in the closed position of the mold, **characterized in that** the locking means (14) are supported by the two shell-holders (5a, 5b).

4. The molding device as claimed in any one of claims 1 to 3, **characterized in that** said face of the protruding flange (17) of the second half-mold (1b), which faces away from the edge of the bearing face (2b), is hollowed out (22) in the shape of an arc of a circle and houses a rotation spindle (23) the free surface of which constitutes said rotation surface (18).

5. The molding device as claimed in claim 4, **characterized in that** the rotation spindle (23) of the moving part (19) supporting the second lock element (16) is supported by a small number of hollowed-out clevises secured to the second half-mold.

6. The molding device as claimed in claim 5, **characterized in that** the clevises are two in number, distant from one another, and in particular situated near the respective ends of the spindle.

7. The molding device as claimed in claim 4, **characterized in that** the rotation spindle of the moving part supporting the second lock element has a height substantially greater than that of the second lock element and **in that** its two ends are engaged in two respective cups, secured to the second mold, whereby the moving part supporting the second lock element bears over substantially the entirety of its height against the rotation spindle.

8. The molding device as claimed in any one of claims 1 to 7, **characterized in that** the first and second hook-shaped lock elements (15, 16) extend continuously over their entire height.

9. The molding device as claimed in any one of claims 1 to 7, **characterized in that** at least the second hook-shaped lock element (16) extends discontinuously over its entire height and comprises a multiplicity of hooks (39) separated from one another (40) and distributed over its entire height.

10. The molding device as claimed in any one of claims 4 to 9, **characterized in that** the rotation spindle is arranged in the form of an eccentric spindle and **in that** pivot control means are associated therewith,
whereby the spindle is able to occupy two angular positions with respect to the moving part, namely a position at minimum radius for which the moving part bears against the part of the spindle that has a minimum radius and for which the moving part can be controlled to be moved toward its locked position or toward its unlocked position and a position at a greater radius for which the moving part bears against a part of the spindle that has a radius greater than the minimum radius and for which the moving part, in the locked position, is immobilized in this position being subjected to traction between the first and second mutually-engaged lock elements and the rotation spindle.

11. The molding device as claimed in any one of claims 1 to 10, this device being of the rotary carousel type, **characterized in that** the actuating means operationally associated with the second lock element comprise at least one idling cam follower roller supported by one part of the moving part situated beyond its bearing surface with respect to the second lock element, said roller being able to cooperate with a fixed guide cam positioned laterally with respect to the rotary carousel.

12. The molding device as claimed in claim 11, **characterized in that** the actuating means for actuating the second lock element comprise a return spring able to return the moving part to a position for which the second lock element is in the catching position.

13. The molding device as claimed in claim 10, this device being of the rotary carousel type, **characterized in that** the means for controlling the pivoting of the eccentric spindle comprise an idling cam follower roller supported, via a transmission mechanism, by one end of said shaft, said roller being able to collaborate with a fixed guide cam positioned laterally with respect to the rotary carousel.

14. The molding device as claimed in claim 13, **characterized in that** the means for controlling the pivoting of the eccentric spindle comprise a return spring able to return said spindle to its position of minimum radius.

15. The molding device as claimed in any one of claims 1 to 14, **characterized in that** the first hook-shaped lock element is attached and fixed to the first half-mold.

16. The molding device as claimed in any one of claims 1 to 14, **characterized in that** the first hook-shaped lock element is formed as an integral part of the first half-mold.

17. The molding device as claimed in any one of claims 1 to 16, **characterized in that** the second hook-shaped lock element is attached and fixed to said moving part.

18. The molding device as claimed in any one of claims 1 to 16, **characterized in that** the second hook-shaped lock element is formed as an integral part of said moving part.

19. The molding device as claimed in any one of claims 1 to 16, **characterized in that** said pivoting surface in the shape of an arc of a circle for the moving part is supported by a mounting plate attached and fixed to the second half-mold.

## Patentansprüche

1. Formvorrichtung zur Herstellung von Behältern aus Vorformen aus erhitztem thermoplastischem Material durch Blasen oder Streck-Blas-Ziehen, wobei die Vorrichtung umfasst: wenigstens eine Form (1) mit wenigstens zwei Halbformen (1a, 1b), die gegeneinander zwischen einer Öffnungsposition, in der sie voneinander beabstandet sind, und einer Schließposition, in der sie an jeweils zusammenwirkenden, eine Verbindungsebene (3) definierenden Andrückflächen (2a, 2b) eng gegeneinander gedrückt sind, bewegbar sind, wobei Verriegelungsmittel (14) vorgesehen sind, um die zwei Halbformen (1a, 1b in Schließposition zu verriegeln, wobei die Verriegelungsmittel (14) an wenigstens einer Seite der Form ein erstes Riegelelement (15) in Form eines Hakens, der fest mit der ersten Halbform (1a) entlang des Randes der Andrückfläche (2a) derselben verbunden ist, und ein zweites Riegelelement (16) in Form eines in Bezug auf den vorhergehenden umgewendeten Hakens umfassen, das schwenkbar an einer Drehfläche an der zweiten Halbform (1b) befestigt ist, sowie Betätigungsmittel, die dem zweiten Riegelelement funktionsmäßig zugeordnet sind, um dieses quer zwischen einer Verriegelungsposition, in der es mit dem ersten Riegelelement in Eingriff ist, um die zwei Halbformen in Schließposition zu verriegeln, und einer Entriegelungsposition zu verschieben, in der es von dem ersten Riegelelement gelöst ist, um die zwei Halbformen freizugeben, die dann voneinander beabstandet werden können,
**dadurch gekennzeichnet, dass** ferner:
- das erste und das zweite hakenförmige Riegelelement (15, 16) sich jeweils über die gesamte Höhe der ersten und der zweiten Halbform (1a, 1b) erstrecken,
- die zweite Halbform (1b) entlang des Randes ihrer Andrückfläche (2b) und wenigstens auf dem größeren Teil ihrer Höhe einen radial vorspringenden Flügel (17) aufweist, der an seiner von der Andrückfläche (2b) abgewandten Seite kreisbogenartig geformt und geeignet ist, eine Drehoberfläche (18) zu bilden, und
- das zweite Riegelelement (16) zu einem Ende eines beweglichen Teils (19) gehört, das mit einem quer vorspringenden Flügel (20) versehen ist, der einen kreisbogenförmigen Anlageanschlag definiert, der in Richtung des zweiten hakenförmigen Riegelelements (16) gewandt ist und geeignet ist, kontinuierlich auf der gesamten Höhe der Drehoberfläche (18) des zweiten Riegelelements (1b) anzuliegen,
wodurch, wenn die Form geschlossen und verriegelt und dem Blasdruck ausgesetzt ist, die Kraft, der die zweite Halbform ausgesetzt ist, von dem beweglichen Teil in im wesentlichen kontinuierlicher Weise auf dem größeren Teil seiner Höhe über die Drehoberfläche aufgenommen wird.

2. Formvorrichtung nach Anspruch 1, bei der die Form (1) vom klappbaren Typ ist, wobei die zwei Halbformen (1a, 1b) gegeneinander um eine zu einer Kante der Verbindungsebene (3) im Wesentlichen parallele Welle (8) drehbar angelenkt sind, **dadurch gekennzeichnet, dass** die Verriegelungsmittel (14) auf der Seite der Form vorgesehen sind, die der Welle (8) der zwei Halbformen gegenüber liegt.

3. Formvorrichtung nach Anspruch 1 oder 2, bei der jede Halbform (1a, 1b) einen Schalenträger (5a, 5b) umfasst, an dem innen eine Schale (6a, 6b) befestigt ist, die mit einem Halb-Formabdruck (4a, 4b) versehen ist, wobei die Verbindungsebene (6) durch die zwei in Schließposition der Form angefügten Schalen (6a, 6b) definiert ist, **dadurch gekennzeichnet, dass** die Verriegelungsmittel (14) von den zwei Schalenträgern (5a, 5b) unterstützt sind.

4. Formvorrichtung nach einem beliebigen der Ansprüche 1 bis 3, **dadurch gekennzeichnet, dass** die Seite des vorspringenden Flügels (17) der zweiten Halbform (1b), die entgegengesetzt zum Rand der Andrückfläche (2b) orientiert ist, kreisbogenförmig ausgehöhlt (22) ist und eine Drehachse (23) beherbergt, deren freie Oberfläche die Drehoberfläche (18) bildet.

5. Formvorrichtung nach Anspruch 4, **dadurch gekennzeichnet, dass** die Drehachse (23) des beweglichen Teils (19), das das zweite Riegelelement (16) stützt, von einer kleinen Zahl von mit der zweiten Halbform fest verbundenen Gabeln gehalten ist.

6. Formvorrichtung nach Anspruch 5, **dadurch gekennzeichnet, dass** die Gabeln zwei an der Zahl und voneinander beabstandet und insbesondere in der Nähe der jeweiligen Enden der Achse angeordnet sind.

7. Formvorrichtung nach Anspruch 4, **dadurch gekennzeichnet, dass** die Drehachse des beweglichen Teils, das das zweite Riegelelement stützt, eine merklich größere Höhe als die des zweiten Riegelelements hat, und dass seine zwei Enden in zwei jeweiligen mit der zweiten Form fest verbundenen Näpfen in Eingriff sind, wodurch das das zweite Riegelelement stützende bewegliche Teil auf im wesentlichen seiner gesamten Höhe auf der Drehachse ruht.

8. Formvorrichtung nach einem beliebigen der Ansprüche 1 bis 7, **dadurch gekennzeichnet, dass** das erste und zweite hakenförmige Riegelelement (15, 16) sich über ihre gesamte Höhe kontinuierlich erstrecken.

9. Formvorrichtung nach einem beliebigen der Ansprüche 1 bis 7, **dadurch gekennzeichnet, dass** wenigstens das zweite hakenförmige Riegelelement (16) sich diskontinuierlich über seine gesamte Höhe erstreckt und eine Mehrzahl von voneinander beabstandeten (40), über seine gesamte Höhe verteilten Haken (39) umfasst.

10. Formvorrichtung nach einem beliebigen der Ansprüche 4 bis 9, **dadurch gekennzeichnet, dass** die Drehachse in Form einer exzentrischen Achse eingerichtet ist, und dass ihr Schwenksteuermittel zugeordnet sind,
wodurch die Achse in der Lage ist, zwei Winkelpositionen in Bezug auf das bewegliche Teil einzunehmen, nämlich eine Position mit minimalem Radius, für die das bewegliche Teil auf dem Bereich der Achse mit minimalem Radius ruht und für die das bewegliche Teil gesteuert werden kann, um in seine Verriegelungsposition oder seiner Entriegelungsposition verschoben zu werden, und eine Position mit vergrößertem Radius, für die das bewegliche Teil auf einem Bereich der Achse mit einem größeren Radius als dem minimalen Radius ruht und für die das bewegliche Teil in Verriegelungsposition in dieser Position blockiert ist, indem es zwischen den zwei ineinander eingreifenden ersten und zweiten Riegelelementen und der Drehachse unter Zug gesetzt ist.

11. Formvorrichtung nach einem der Ansprüche 1 bis 10, wobei die Vorrichtung vom drehbeweglichen Karusselltyp ist, **dadurch gekennzeichnet, dass** die dem zweiten Riegelelement funktionsmäßig zugeordneten Betätigungsmittel wenigstens einen freien Nockenfolger umfassen, der von einem Bereich des beweglichen Teil unterstützt ist, der sich jenseits seines Anlageanschlags in Bezug auf das zweite Riegelelement befindet, wobei der Nockenfolger in der Lage ist, mit einem festen Führungsnocken zusammenzuwirken, der seitlich an dem drehbaren Karussell angeordnet ist.

12. Formvorrichtung nach Anspruch 11, **dadurch gekennzeichnet, dass** die Mittel zur Betätigung des zweiten Riegelelements eine Rückstellfeder umfassen, die in der Lage ist, das bewegliche Teil in eine Position zurückzustellen, für die das zweite Riegelelement in Einhakposition ist.

13. Formvorrichtung nach Anspruch 10, wobei die Vorrichtung vom drehbeweglichen Karusselltyp ist, **dadurch gekennzeichnet, dass** die Schwenksteuermittel der exzentrischen Achse einen freien Nockenfolger umfassen, der über einen Umlenkmechanismus durch ein Ende der Welle abgestützt ist, wobei der Nockenfolger in der Lage ist, mit einem festen Führungsnocken zusammenzuwirken, der seitlich an dem drehbaren Karussell angeordnet ist.

14. Formvorrichtung nach Anspruch 13, **dadurch gekennzeichnet, dass** die Schwenksteuermittel der exzentrischen Achse eine Rückstellfeder umfassen, die in der Lage ist, die Achse in ihre Position mit minimalem Radius zurückzustellen.

15. Formvorrichtung nach einem beliebigen der Ansprüche 1 bis 14, **dadurch gekennzeichnet, dass** das erste hakenförmige Riegelelement an der ersten Halbform angefügt und befestigt ist.

16. Formvorrichtung nach einem beliebigen der Ansprüche 1 bis 14, **dadurch gekennzeichnet, dass** das erste hakenförmige Riegelelement einteilig mit der ersten Halbform ausgebildet ist.

17. Formvorrichtung nach einem beliebigen der Ansprüche 1 bis 16, **dadurch gekennzeichnet, dass** das zweite hakenförmige Riegelelement an dem beweglichen Teil angefügt und befestigt ist.

18. Formvorrichtung nach einem beliebigen der Ansprüche 1 bis 16, **dadurch gekennzeichnet, dass** das zweite hakenförmige Riegelelement einteilig mit dem beweglichen Teil ausgebildet ist.

19. Formvorrichtung nach einem beliebigen der Ansprüche 1 bis 16, **dadurch gekennzeichnet, dass** die kreisbogenförmige Schwenkoberfläche für das bewegliche Teil von einer an der zweiten Halbform angefügten und befestigten Platte unterstützt ist.
